# EUROPEAN PATENT SPECIFICATION

(11) **EP 1 686 638 B1**
(45) Date of publication and mention of the grant of the patent: **17.03.2010**
(21) Application number: 06001943.7
(22) Date of filing: 31.01.2006
(51) Int. Cl.: H01M 2/16, H01M 8/10

(54) **Fuel cell separator**
Brennstoffzellenseparator
Séparateur de pile à combustible

(30) Priority: 31.01.2005 JP 2005022611
(43) Date of publication of application: 02.08.2006
(73) Proprietor: NICHIAS CORPORATION, Tokyo 105-8555 (JP)
(72) Inventor: Inagaki, Tsuyoshi, Hamamatsu-shi Shizuoka 431-2103 (JP); Omura, Atsushi, Hamamatsu-shi Shizuoka 431-2103 (JP); Nakano, Hideto, Hamamatsu-shi Shizuoka 431-2103 (JP); Nagai, Kouji, Hamamatsu-shi Shizuoka 431-2103 (JP); Ohinata, Tetsuo, Hamamatsu-shi Shizuoka 431-2103 (JP)
(74) Representative: Grünecker, Kinkeldey, Stockmair & Schwanhäusser Anwaltssozietät

(56) References cited:
- EP-A- 1 029 893
- PATENT ABSTRACTS OF JAPAN vol. 2003, no. 12, 5 December 2003 (2003-12-05) -& JP 2004 259497 A (MATSUSHITA ELECTRIC WORKS LTD), 16 September 2004 (2004-09-16)
- PATENT ABSTRACTS OF JAPAN vol. 2003, no. 12, 5 December 2003 (2003-12-05) -& JP 2004 119345 A (SUMITOMO BAKELITE CO LTD), 15 April 2004 (2004-04-15)

## Description

### FIELD OF THE INVENTION

The present invention relates to a separator for a fuel cell (hereinafter referred to as "fuel cell separator").

### BACKGROUND OF THE INVENTION

Fuel cells in general have a structure in which a multiple of unit cells are stacked and each of the unit cells is provided with a matrix containing an electrolyte, electrode plates holding the matrix therebetween, and a fuel cell separator disposed outside the electrode plates.

The fuel cell separator can ordinarily be divided into a power collection part (inner part) and a manifold (outer part), and a fuel (hydrogen) and a gas oxidizer (oxygen) are supplied to the power collection part. Therefore, the power collection part needs to be excellent in gas impermeability so as to prevent hydrogen and oxygen from being mixed. The manifold part needs to have satisfactory mechanical strength in order to endure a gas pressure, and to have a low creeping property and a low thermal expansion property in order for dimensional stability. In the stacking process, an adhesive agent and a rubber sealing material are used for insulation between the cells in the manifold part.

In order to improve a reaction efficiency of the fuel cell, a cooling water is supplied to the manifold part to prevent heat generation due to reaction heat. Therefore, if ions and organic substances elute off from the fuel cell separator, the adhesive agent, and the rubber sealing material into the cooling water, a power generation property is degraded by generation of short in the manifold part, deterioration of an electrolytic film and a catalyst, and the like. Accordingly, it is desired that the fuel cell components have a low elution characteristic.

A molded article obtained by molding an electroconductive resin composition containing a resin material containing thermosetting resin, a curing agent and a curing accelerator, and a graphite based electroconductive material has heretofore been used as the fuel cell separator. Therefore, elution of impurities contained in graphite and products generated due to a side reaction and a heat decomposition of the resin material can be caused. As a countermeasure for such elution, various treatments have heretofore been proposed. For example, References 1 and 2 propose to prevent elution of water soluble organic substances and water soluble ions by washing the molded article with a protic solvent and a heated aqueous treatment liquid; Reference 3 proposes to add a trapping agent having a function of trapping an eluted ingredient to the fuel cell separator or to apply the trapping agent on a surface of the fuel cell separator; and Reference 4 proposes heating of the molded article at 300 to 800°C. However, since the above treatments are post-treatments which are performed after obtaining the molded article, productivity can be degraded by the treatments. Also, the treatments are far from the fundamental solution.

An amine based curing agent and an amine based curing accelerator are generally used for the electroconductive resin composition using an epoxy resin as the resin. An ammonium ingredient is usually generated due to a side reaction and a heat decomposition of the amine based compound, which can undesirably raise electroconductivity when eluted in a cooling liquid.
Though a method of reducing a residual sulfate group of expanded graphite used as the electroconductive material has been proposed from the view point of reducing the substances eluted from the materials contained in the fuel cell (Reference 5), a method for reducing the elution from the resin material has not been proposed yet.
Reference 1: JP 2004-259497 A
Reference 2: JP 2004-149695 A
Reference 3: JP 2004-235034 A
Reference 4: JP 2004-119345 A
Reference 5: JP 2000-100453 A

This invention has been accomplished in view of the above-described circumstances, and an object thereof is to provide a fuel cell separator made from a resin material containing an epoxy resin, which is capable of reducing elution from the resin material otherwise caused by a cooling water, and seldom or never causes degradation in power generation property due to an increase in electroconductivity of the cooling water, deterioration of an electrolytic film and a catalyst, and the like.

Other objects and effects of the invention will become apparent from the following description.

### SUMMARY OF THE INVENTION

The present inventors have made eager investigation to examine the problem. As a result, it has been found that the foregoing objects can be achieved by the following fuel cell separators. With this finding, the present invention is accomplished.

The present invention is directed to a fuel cell separator according to claims 1-5.

According to this invention, it is possible to obtain a fuel cell separator which is remarkably reduced in eluted substances generated due to a cooling water and seldom or never causes degradation in power generation property due to an increase in electroconductivity of the cooling water, deterioration of an electrolytic film and a catalyst, and the like.

### BRIEF DESCRIPTION OF THE DRAWINGS

Fig. 1 is a perspective view showing one example a fuel cell separator of this invention.
Fig. 2 is a diagram schematically showing a measurement method of electric resistance in Examples.

### DETAILED DESCRIPTION OF THE INVENTION

Hereinafter, a fuel cell separator according to this invention will be described in detail.

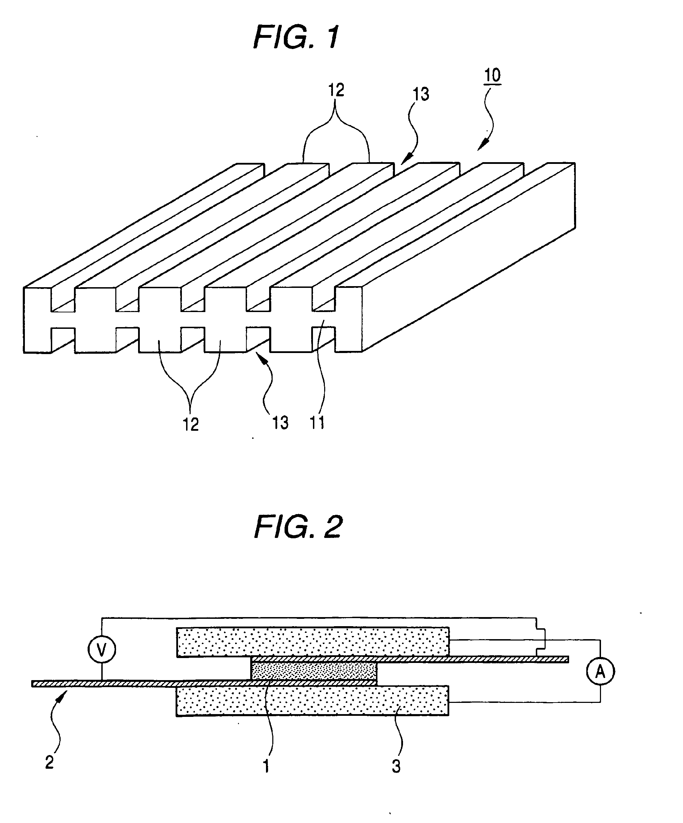

The fuel cell separator of this invention is obtained by molding an electroconductive resin composition produced from a mixture including: a resin material containing a thermosetting resin containing an epoxy resin, a curing agent, and a curing accelerator; and a carbon material containing expanded graphite into a predetermined shape such as that shown in Fig. 1. The Fuel cell separator 10 shown in Fig. 1 has plural partitions 12 disposed at a predetermined interval on both sides of a flat plate 11. In order to obtain a fuel cell, a multiple of the plural fuel cell separators 10 are stacked in directions of the projection of the partitions 12 (vertical directions in Fig. 1). Thanks to the stacking, a pair of partitions 12 adjacent to each other forms a channel 3 through which reaction gases (hydrogen gas and oxygen gas) flow. A manifold (not shown) is formed in such a fashion as to enclose four corners of the fuel cell separator 10 for supply of the cooling water.

The carbon material is an electroconductive material containing a carbon atom as a main ingredient, and specific examples thereof include expanded graphite, an artificial flake graphite, an artificial spherical graphite, a natural flake graphite, carbon black, a carbon fiber, a carbon nanofiber, a carbon nanotube, a carbon nanocoil, fullerene, a carbon nanohorn, and the like without limitation thereto. Particularly, the expanded graphite is obtained by exfoliating a gap between layers of a graphite crystal structure and considerably bulky. The expanded graphite is obtained, e.g., by treating flake graphite with concentrated sulfuric acid, and heating the treated graphite to enlarge the interplanar spacing in the crystal structure of graphite. Therefore, a surface area of the expanded graphite is larger than that of the flake graphite or the spherical graphite, and particles thereof has a shape of thin plate. Accordingly, the expanded graphite readily forms an electroconductive path when mixed with a resin to give a fuel cell separator of high electroconductivity. Also, since the expanded graphite has the thin plate-like shape, it is more flexible than the artificial graphite and the natural graphite, and a flexible fuel cell separator is obtainable by the use of the expanded graphite. In view of the high electroconductivity and flexibility, the expanded graphite is preferably contained in a fuel cell separator, and the expanded graphite may be used alone as the carbon material. Alternatively, the expanded graphite may be used as a part of the carbon material, and other materials listed above may be used in combination as the carbon material. In this case, the expanded graphite is preferably contained in the carbon material from 5 to 100% by weight (hereinafter referred to as "wt%"), more preferably from 20 to 80 wt%, still more preferably from 30 to 70 wt%.

The carbon material is used in an amount of from 60 to 80 wt% of a total amount of the electroconductive resin composition from the standpoint of electroconductivity and strength of the fuel cell separator. An amount of the resin is naturally reduced when the amount of the carbon material exceeds 80 wt%. Though the reduction in resin amount is advantageous for the electroconductivity, the desired fuel cell separator is not obtained when the resin amount is reduced too much due to a lack of fluidity of the composition in the molding process. In turn, when the carbon material is less than 60 wt%, problems such as deterioration of electroconductivity of fuel cell separator are raised. Therefore, the amount of the carbon material is preferably from 60 to 80 wt%, more preferably from 65 to 80 wt% in view of a balance between the electroconductivity and the strength, and still more preferably from 70 to 80 wt%.

The thermosetting resin in the resin material contains an epoxy resin. The epoxy resin preferably be contained at a proportion of from 5 to 100 wt% of the thermosetting resin in view of characteristics, productivity, and the like of the fuel cell separator. The rest of the thermosetting resin is at least one selected from a phenol resin, a furan resin, an unsaturated polyester resin, and a polyimide resin. For the purpose of improving heat resistance, it is preferable to use the epoxy resin and the polyimide resin in combination.

As the epoxy resin, it is possible to use various known compounds. Examples of the epoxy resin include a difunctional epoxy compound such as a bisphenol A diglycidyl ether type, a bisphenol F diglycidyl ether type, a bisphenol S diglycidyl ether type, a bisphenol AD diglycidyl ether type, and a resorcinol diglycidyl ether type; a polyfunctional epoxy compound such as a phenol novolac type and a cresol novolac type; a linear aliphatic epoxy compound such as an epoxidized soybean oil; a cyclic aliphatic epoxy compound; a heterocyclic epoxy compound; a glycidylester based epoxy compound; glycidylamine based epoxy compound; and the like without limitation thereto. Among the above listed epoxy resin, the polyfunctional epoxy resin may be preferred in this invention because a molded article having high heat resistance and strength is obtained by the use of the polyfunctional epoxy resin. An epoxy equivalent amount, a molecular weight, and the like of the epoxy resin are not particularly limited.

The epoxy resin becomes an epoxy hardened material when reacted with a curing agent. As the curing agents for the epoxy resin, amine based, oxide anhydride based, and polyphenol based curing agents are generally used. However, since the amine based curing agent forms ammonium ions to raise ion electroconductivity of the cooling water as described in the foregoing, the acid anhydride based curing agent or the polyphenol based curing agent is used.

A representative example of the polyphenol based curing agent is a novolac type phenol resin which is usable in this invention.

Examples of the acid anhydride curing agent include aliphatic acid anhydride such as dodecenylsuccinic anhydride and polyadipic anhydride; alicyclic acid anhydride such as methyltetrahydrophthalic anhydride and methylhexahydrophthalic anhydride; aromatic acid anhydride such as phthalic anhydride and trimellitic anhydride; halogen based acid anhydride; and the like without limitation thereto. Since the acid anhydride based curing agents are solid substances at an ordinary temperature and have a moderate melting point and carboxyl groups, handling thereof is easy, and they are high in reactivity and excellent in chemical resistance. Therefore, the acid anhydride based curing agents are favorably used in this invention. The trimellitic anhydride is particularly preferred since it prominently exhibits the above favorable characteristics.

Since the above-listed curing agents are slow in reaction when used alone, the curing accelerator behaving as a catalyst for promoting the curing is used in combination. Though amine based curing accelerators are widely used as the curing accelerator, the amine based curing accelerators forms ammonium ions to raise the ion electroconductivity in the cooling water as described in the foregoing. Accordingly, an urea derivative, an azabicyclo compound, an organic phosphoric acid, or an imidazole compound having a molecular weight of 100 or more is preferably used in this invention. Particularly, in view of characteristics and processability of the fuel cell separator, the imidazole compound having molecular weight of 100 or more is preferred. Since an imidazole compound having a molecular weight less than 100 easily dissolved into water due to heat decomposition, the fuel cell separator reduced in the amount of eluted substances, which is the object of this invention, such imidazole compound is not preferably used. Known urea derivatives, azabicyclo compounds, and organic acids can be used in this invention as the curing accelerator.

Examples of the imidazole compound having molecular weight of 100 or more include 2-undecylimidazole (molecular weight: 224), 2-heptadecylimidazole (molecular weight: 307), 2-ethyl-4-methylimidazole (molecular weight: 110), 2-phenylimidazole (molecular weight: 144), 2-phenyl-4-methylimidazole (molecular weight: 158), 1-benzyl-2-methylimidazole (molecular weight: 172), 1-benzyl-2-phenylimidazole (molecular weight: 234), 1-cyanoethyl-2-methylimidazole (molecular weight: 135), 1-cyanoethyl-2-ethyl-4-methylimidazole (molecular weight: 163), 1-cyanoethyl-2-undecylimidazole (molecular weight: 275), 1-cyanoethyl-2-phenylimidazole (molecular weight: 197), 1-cyanoethyl-2-undecylimidazolium trimelitate (molecular weight: 486), 1-cyanoethyl-2-phenylimidazolium trimelitate (molecular weight: 407), 2,4-diamino-6-[2'-methylimidazolyl-(1')]-ethyl-s-triadine (molecular weight: 219), 2,4-diamino-6-[2'-undecylimidazolyl-(1')]-ethyl-s-triadine (molecular weight: 360), 2,4-diamino-6-[2'-ethyl-4'-methylimidazolyl-(1')]-ethyl-s-triadine (molecular weight: 247), 2,4-diamino-6-[2'-methylimidazolyl-(1')]-ethyl-s-triadine isocyanulic acid adduct (molecular weight: 384), 2-phenylimidazole isocyanulic acid adduct (molecular weight: 273), 2-methylimidazole isocyanulic acid adduct (molecular weight: 588), 2-phenyl-4,5-dihydroxymethylimidazole (molecular weight: 204), 2-phenyl-4-methyl-5-hydroxymethylimidazole (molecular weight: 188), and 2,3-dihydro-1H-pyrrolo-[1,2-a]benzimidazole (molecular weigh: 158) without limitation thereto. Particularly, the molecular weight of the imidazole compound is preferably from 100 to 500, more preferably from 120 to 300, still more preferably from 150 to 250.

An amount of the curing agent is preferably from 0.7 to 1.2 equivalent weight per epoxy group, more preferably from 0.8 to 1.1 equivalent weight per epoxy group, though the amount depends on the type and the usage mount of the epoxy resin. An amount of the curing accelerator is preferably from 0.1 to 20 parts by weight with respect to 100 parts by weight of the curing agent. When the usage amounts deviate from the above ranges, the curing may not proceed well to adversely affect on solid state properties of the fuel cell separator.

As used herein, the polyimide resin to be mixed with the epoxy resin means all polymers having an imide group [(-CO-)₂N-] in a molecule. Examples of polyimide resin include thermoplastic polyimide such as polyamideimide and polyetherimide; thermosetting polyimide such as nadic acid type polyimide including bismaleimide type polyimide and allylnadiimide and acetylene type polyimide; and the like. Since thermosetting polyimide has an advantage of easy processability as compared to thermoplastic polyimide and non-thermoplastic polyimide, it is preferable to use thermosetting polyimide in this invention. A high temperature property of thermosetting polyimide is considerably good among organic polymers, and the thermosetting polyimide seldom or never causes a void and a crack. Therefore, thermosetting polyimide is suitably used as an ingredient of the resin composition of this invention.

A mixing ratio between the epoxy resin and the polyimide resin is preferably that 5 to 95 wt% of the epoxy resin is mixed with 95 to 5 wt% of the polyimide resin. The epoxy resin/polyimide resin mixing ratio is more preferably be from 95:5 to 30:70, still more preferably be from 85:15 to 60:40.

Various known mixing methods can be employed in order to obtain the electroconductive resin composition. For example, dry mixing can be employed for mixing the resin material with the carbon material. Alternatively, the thermosetting resin may be heat melted or dissolved into a solvent, so that other materials are added to the melted or dissolved thermosetting resin. Yet alternatively, plural mixing methods may be used in combination. For example, the dry mixing may be employed for preliminary mixing of the materials, and then heat melting may be employed for melting the mixture. Various mixing machines may be used as an apparatus for the mixing. Examples of the mixing machine include a henschel mixer, a ribbon mixer, a planetary mixer, a mortar mixer, a cone mixer, a V mixer, a pressure kneader, a paddle mixer, a biaxial extruder, a uniaxial extruder, a banbury mixer, a two roller mill, a three roller mill, and the like without limitation thereto. Further, the mixed materials may be pulverized or granulated and then further classified as required.

A method for molding the mixture of the materials into the fuel cell separator is not particularly limited, and ordinary pressure compression molding may be employed. Molding conditions are not particularly limited, but a die temperature may be set to 150 to 220°C, for example. In this case, in order to prevent sticking to the die, a lubricant such as a carnauba wax, stearic acid, and a montanic acid wax may be added.

An additive and a filler included in ordinary fuel cell separators may be added to the electroconductive resin composition in addition to the lubricant. However, a water soluble additive or filler must be excluded since they are sources of the eluted ions.

In the present invention, the electroconductive resin composition that is used for producing a fuel cell separator in the present invention has an elution characteristic so that a dipping water after dipping the electroconductive resin composition therein for 500 hours at 90°C, in which the volume of the dipping water is 1 cm³ with respect to the weight of the electroconductive resin composition of 5.1 g, has an electroconductivity of 50 µS/cm or less. In the measurement of the elution characteristic, the electroconductive resin composition has a shape of 30 mm-width, 50 mm-length and 2 mm-thickness.
As the dipping water, a distilled water is used in the present invention. Thereby, the fuel cell separator that is considerably reduced in eluted ions as compared to conventional ones can be obtained.

### EXAMPLES

The present invention is now illustrated in greater detail with reference to Examples and Comparative Examples, but it should be understood that the present invention is not to be construed as being limited thereto.

### Examples 1 to 5 and

### Comparative Examples 1 to 4

Materials described below are used in amounts shown in Table 1. Each of Examples 1 to 5 and Comparative Examples 1 to 4 was prepared as follows. The materials were thrown into a henschel mixer to be dry mixed at a room temperature. The thus-obtained mixed powder was thrown into a pressure kneader to be melt mixed at 100°C, followed by solidification by natural cooling. Then the thus-obtained solidified substance was pulverized into a melt mixed powder having an average particle diameter of 200 µm. A die heated to 100°C was filled with the melt mixed powder, followed by press molding under 3 to 5 MPa to obtain a sheet-like preliminary molded article. The preliminary molded article sheet was placed on a die heated to 160°C, followed by molding under 100 MPa for 10 minutes to obtain a sample sheet having a shape as indicated below.

### <Carbon Material>

Expanded graphite (average particle diameter: about 400 to 800 µm)
Acetylene black (average particle diameter: about 5 to 10 µm)
Artificial graphite (average particle diameter: about 40 to 50 µm)
Carbon fiber (fiber diameter: 13 µm, fiber length: 370 µm)

### <Thermosetting Resin>

Epoxy resin: bisphenol A novolac type epoxy resin
Polyimide resin: bismaleimide type polyimide

### <Curing Agent>

Trimellitic anhydride
Dicyandiamide

### <Curing Accelerator>

2-methylimidazole (molecular weight: 82)
2-phenylimidazole (molecular weight: 144)
2-phenyl-4,5-hydroxymethylimidazole (molecular weight: 204) DBU (1,8-diazadicyclo(5,4,0)-undecene-7) (molecular weight: 152)
3-(3,4-dichlorophenyl)-1,1-dimethylurea (molecular weight: 233)
Triphenylphosphine (molecular weight: 262)

The thus-obtained sample was subjected to (1) electroconductivity evaluation, (2) hot bend strength measurement, and (3) measurement of electroconductivity of dipping water as described below. Results are shown in Table 1.

### (1) Electroconductivity Evaluation

As schematically shown in Fig. 2, a sample 1 was set between electrodes 3 via carbon papers 2 to calculate an electric resistance from a current supplied to the electrodes and a voltage between the carbon papers 2. The electric resistance was multiplied by an area of the sample to obtain a specific resistance in a feedthrough direction. The fuel cell separator preferably have a specific resistance of 20 mΩcm² or less, more preferably 15 mΩcm² or less. In this evaluation, the shape of each sample was set to have 30 mm-width, 30 mm-length and 2 mm-thickness.

### (2) Hot Bend Strength Measurement

Hot bend strength was detected according to a plastic flexural property testing method of JIS K 7171.
The test was conducted by using AUTOGRAPH AG-100kN manufactured by Shimadzu Corporation with a thermostatic bath under a test atmosphere of 100°C. The hot bend strength preferably be 30 MPa or more. In this measurement, the shape of each sample was set to have 10 mm-width, 50 mm-length and 2 mm-thickness.

### (3) Measurement of Electroconductivity of Dipping Water

A shape of each of the samples and an amount of a dipping water (distilled water) were adjusted to achieve a ratio between a weight of the sample and a volume of the dipping water becomes 5.1 g : 1 cm³ The sample was dipped into the dipping water and then left for 500 hours at 90°C. After that, the dipping water was cooled to a room temperature by natural cooling, followed by a measurement of electroconductivity of the dipping water using HANDY ELECTROCONDUCTIVITY METER ES-14 manufactured by Horiba, Ltd. The electroconductivity lower than 50 µS/cm bears the test. In this measurement, the shape of each sample was set to have 30 mm-width, 50 mm-length and 2 mm-thickness.

**Table 1**

| | Comp.Ex.1 | Comp.Ex.2 | Comp.Ex.3 | Comp.Ex.4 | Ex.1 | Ex.2 | Ex.3 | Ex.4 | Ex.5 |
|---|---|---|---|---|---|---|---|---|---|
| Bisphenol A novolac type epoxy resin | 10 | 10 | 10 | 10 | 10 | 10 | 10 | 10 | 10 |
| Trimellitic anhydride | - | 8 | 20 | 4 | 8 | 8 | 8 | 8 | 8 |
| Dicyandiamide | 8 | - | - | - | - | - | - | - | - |
| 2-methylimidazole | - | 1 | - | - | - | - | - | - | - |
| 2-phenylimidazole | 1 | - | 5 | 0.5 | 1 | - | - | - | - |
| 2-phenyl-4,5-hydroxymethylimidazole | - | - | - | - | - | 1 | - | - | - |
| DBU | - | - | - | - | - | - | 1 | - | - |
| 3-(3,4-dichlorophenyl)-1,1-dimethylurea | - | - | - | - | - | - | - | 1 | - |
| Triphenylphosphine | - | - | - | - | - | - | - | - | 1 |
| Expanded graphite | 40 | 40 | 23.9 | 45 | 40 | 40 | 40 | 40 | 40 |
| Artificial graphite | 20 | 20 | 12.1 | 23 | 20 | 20 | 20 | 20 | 20 |
| Polyimide resin | 5 | 5 | 5 | 5 | 5 | 5 | 5 | 5 | 5 |
| Carbon black | 5 | 5 | 3.1 | 6 | 5 | 5 | 5 | 5 | 5 |
| Carbon fiber | 10 | 10 | 5.9 | 11 | 10 | 10 | 10 | 10 | 10 |
| Hot Bend Strength (MPa) | 47 | 45 | 50 | 25 | 45 | 47 | 47 | 50 | 45 |
| Feedthrough direction electric resistance (mΩcm²) | 13 | 15 | 50 | 10 | 15 | 16 | 17 | 17 | 15 |
| Dipping water electroconductivity (µS/cm) | 100 | 60 | 40 | 30 | 32 | 37 | 30 | 35 | 30 |

| | | | | | | | | | |
|---|---|---|---|---|---|---|---|---|---|
| Unit of each of compositions is wt% | | | | | | | | | |

As shown in Table 1, the samples obtained by using trimellitic anhydride as the curing agent, imidazole having molecular weight of 100 or more as the curing accelerator, DBU, and the urea derivative or an organic phosphoric acid are excellent in flexure strength, resistance, and electroconductivity.

In contract, the sample of Comparative Example 1 which was obtained by using dicyandiamide as the curing agent is high in electroconductivity due to elution of an ammonium ingredient from the curing agent, though it is excellent in bend strength and resistance. The sample of comparative Example 2 which was obtained by using trimellitic anhydride as the curing agent and the imidazole compound (2-methylimidazole) having molecular weight less than 100 as the curing accelerator is high in electroconductivity due to elution from the curing accelerator.

As is apparent from results of the samples of Comparative Examples 3 and 4, the resistance is increased when the carbon material is reduced since the resin serving as an insulating material is relatively increased, while the bend strength is reduced when the carbon material is increased though the resistance is kept satisfactorily low.

## Claims

1. A fuel cell separator comprising an electroconductive resin composition, wherein the electroconductive resin composition is produced from a mixture comprising:
a thermosetting resin containing an epoxy resin;
a curing agent which is an acid anhydride based curing agent;
a curing accelerator which is at least one of a urea derivative, an azabicyclo compound, an organic phosphoric acid, an imidazole compound having a molecular weight of 100 or more; and
a carbon material containing an expanded graphite and wherein the carbon material is 60 to 80% by weight of the electroconductive resin composition.

2. The fuel cell separator according to claim 1, wherein the curing accelerator is 0.1 to 20 parts by weight of 100 parts by weight of the curing agent.

3. The fuel cell separator according to claim 1, wherein the thermosetting resin contains 5 to 100% by weight of the epoxy resin, and the rest thereof contains at least one of a phenol resin, a furan resin, an unsaturated polyester resin, and a polyimide resin.

4. The fuel cell separator according to claim 1, wherein the carbon material contains 5 to 100% by weight of an expanded graphite, and the rest thereof contains at least one of an artificial graphite, a natural flake graphite, a soil graphite, a carbon black, and a carbon fiber.

5. The fuel cell separator according to claim 1, wherein the thermosetting resin contains:
5 to 95% by weight of the epoxy resin; and 95 to 5% by weight of the polyimide resin.

## Patentansprüche

1. Brennstoffzellenseparator, umfassend eine elektroleitfähige Harzzusammensetzung, wobei die elektroleitfähige Harzzusammensetzung aus einer Mischung hergestellt ist, die umfasst:
ein wärmehärtbares Harz, das ein Epoxyharz enthält;
ein Härtemittel, das ein säureanhybridbasiertes Härtemittel ist;
einen Härtebeschleuniger, der mindestens eines von einem Harnstoffderivat, einer Azabicycloverbindung, einer organischen Phosphorsäure, einer Imidazolverbindung, die ein Molekulargewicht von 100 oder mehr besitzt, ist; und
einem Kohlenstoffmaterial, das einen expandierten Graphit enthält, und wobei das Kohlenstoffmaterial 60 bis 80 Gew.-% der elektroleitfähigen Harzzusammensetzung ist.

2. Der Brennstoffzellenseparator gemäß Anspruch 1, wobei der Härtebeschleuniger 0,1 bis 20 Gewichtsteile von 100 Gewichtsteilen des Härtemittels ist.

3. Der Brennstoffzellenseparator gemäß Anspruch 1, wobei das wärmehärtbare Harz 5 bis 100 Gew.-% des Epoxyharzes enthält, und der Rest davon mindestens eines von einem Phenolharz, einem Furanharz, einem ungesättigten Polyesterharz und einem Polyimidharz enthält.

4. Der Brennstoffzellenseparator gemäß Anspruch 1, wobei das Kohlenstoffmaterial 5 bis 100 Gew.-% eines expandierten Graphits enthält, und der Rest davon mindestens eines von einem künstlichen Graphit, Graphit aus natürlichen Flocken, Graphit aus dem Boden (soil graphite), Carbon Black und einer Carbonfaser enthält.

5. Der Brennstoffzellenseparator gemäß Anspruch 1, wobei das wärmehärtbare Harz enthält:
5 bis 95 Gew.-% des Epoxyharzes; und 95 bis 5 Gew.-% des Polyimidharzes.

## Revendications

1. Séparateur de pile à combustible comprenant une composition de résine électroconductrice, où la composition de résine électroconductrice est produite à partir d'un mélange comprenant :
une résine thermodurcissable contenant une résine époxy ;
un agent de durcissement qui est un agent de durcissement à base d'anhydride d'acide ;
un accélérateur de durcissement qui est au moins un dérivé d'urée et/ou un composé azabicyclo et/ou un acide phosphorique organique et/ou un composé imidazole ayant une masse moléculaire de 100 ou plus ; et
un matériau de carbone contenant un graphite expansé et où le matériau de carbone représente 60 à 80 % en poids de la composition de résine électroconductrice.

2. Séparateur de pile à combustible selon la revendication 1, où l'accélérateur de durcissement représente 0,1 à 20 parties en poids de 100 parties en poids de l'agent de durcissement.

3. Séparateur de pile à combustible selon la revendication 1, où la résine thermodurcissable contient 5 à 100 % en poids de résine époxy et le reste contient au moins une résine de phénol et/ou une résine de furane et/ou une résine de polyester insaturé et/ou une résine de polyimide.

4. Séparateur de pile à combustible selon la revendication 1, où le matériau de carbone contient 5 à 100 % en poids d'un graphite expansé et le reste contient au moins un graphite artificiel et/ou un graphite naturel en paillettes et/ou un graphite de sol et/ou du noir de carbone et/ou une fibre de carbone.

5. Séparateur de pile à combustible selon la revendication 1, où la résine thermodurcissable contient :
5 à 95 % en poids de résine époxy ; et 95 à 5 % en poids de résine de polyimide.
